# FASCICULE DE BREVET EUROPEEN

(11) **EP 1 929 136 B1**
(45) Date de publication et mention de la délivrance du brevet: **15.12.2010**
(21) Numéro de dépôt: 06808290.8
(22) Date de dépôt: 07.09.2006
(51) Int. Cl.: F01N 9/00

(54) **SYSTEME DE REGENERATION D'UN FILTRE A PARTICULES CATALYTIQUE SITUE DANS LA LIGNE D'ECHAPPEMENT D'UN MOTEUR DIESEL**
REGENERATIONSSYSTEM EINES KATALYSATORPARTIKELFILTERS IN EINER DIESELMOTOR-ABGASLEITUNG
SYSTEM FOR REGENERATING A CATALYTIC PARTICULATE FILTER LOCATED IN A DIESEL ENGINE EXHAUST LINE

(30) Priorité: 13.09.2005 FR 0509334
(43) Date de publication de la demande: 11.06.2008
(73) Titulaire: RENAULT S.A.S., 92100 Boulogne Billancourt (FR)
(72) Inventeur: LEPRIEUR, Laurent, F-91470 Limours (FR); MARTINEZ, Alexandre, F-91310 Verrieres Le Buisson (FR); PLOTON, Violaine, F-91640 Machery (FR); THOUVENEL, Nicolas, F-91610 Ballancourt Sur Essonne (FR)
(86) Numéro de dépôt international: PCT/FR2006/050852
(87) Numéro de publication internationale: WO 2007/031669

(56) Documents cités:
- EP-A- 1 176 290
- EP-A- 1 496 212
- WO-A-02/43840

## Description

La présente invention concerne un système et un procédé de régénération d'un filtre à particules catalytique situé dans la ligne d'échappement d'un moteur diesel.

Un filtre à particules catalytique capture des particules de suies émises par le moteur. Pour éviter un colmatage du filtre, des phases périodiques de régénération permettant de brûler les particules piégées. Les particules piégées sont brûlées par élévation de la température des gaz d'échappement.

La demande de brevet français déposée sous le numéro 04 53 187 (RENAULT), porte sur une régénération d'un filtre à particules catalytique par injection de carburant à l'échappement. L'injection de carburant est effectuée par un injecteur situé dans la ligne d'échappement d'un moteur diesel, en amont du filtre à particules catalytique. Un tel système de régénération d'un filtre à particules catalytique pose de nouveaux risques en cas de défaillance. Cependant, ce document ne divulgue pas de système de surveillance de la pompe à carburant alimentant l'injecteur situé dans la ligne d'échappement.

Un but de l'invention est de contrôler que l'état d'activation de la pompe à carburant permettant d'alimenter en carburant l'injecteur disposé dans la ligne d'échappement du véhicule, correspond à l'état d'activation souhaité de la pompe à carburant.

Ainsi, selon l'invention, il est proposé un système de régénération d'un filtre à particules catalytique situé dans la ligne d'échappement d'un moteur diesel. Le système de régénération comprend une unité de commande électronique, un injecteur de carburant commandé disposé en amont du filtre à particules catalytique et alimenté en carburant par une pompe commandée, ainsi qu'un capteur de mesure de la pression d'alimentation en carburant dudit injecteur. Le système comprend, en outre, des moyens de détection d'un défaut de l'état d'activation de la pompe à partir de la pression d'alimentation en carburant dudit injecteur.

En d'autres termes, les moyens de détection détectent un défaut de l'état d'activation de la pompe lorsque la pompe est active alors qu'elle devrait être inactive, ou lorsque la pompe est inactive alors qu'elle devrait être active. Il est alors possible de détecter une défaillance de fonctionnement d'un tel système de régénération d'un filtre à particules catalytique et ainsi de pouvoir éviter des défaillances d'un tel système.

L'invention permet d'améliorer la sécurité des occupants du véhicule par la détection d'une défaillance de l'état d'activation de la pompe servant à alimenter en carburant l'injecteur disposé en amont du filtre à particules catalytique.

Selon l'invention, lesdits moyens de détection comprennent des premiers moyens de comparaison de la pression d'alimentation en carburant dudit injecteur avec une première pression de seuil.

Selon l'invention lesdites moyens de détection comprennent des deuxièmes moyens de comparaison de la valeur respective de premiers paramètres de fonctionnement du système avec des premières valeurs prédéterminées.

Des conditions sur des paramètres de fonctionnement du système doivent être réalisées pour qu'un défaut de non-activité de la pompe puisse être détecté. En d'autres termes, des conditions sur des paramètres de fonctionnement du système doivent être réalisées pour pouvoir détecter que la pompe est active alors qu'elle devrait être inactive.

Selon l'invention, lesdits moyens de détection sont adaptés pour détecter un défaut de non-activité de la pompe lorsque, pendant une durée au moins égale à une première durée prédéterminée, la pression d'alimentation en carburant dudit injecteur est supérieure à ladite première pression de seuil, et lesdits premiers paramètres valent lesdites premières valeurs prédéterminées respectives.

Pour qu'un défaut de non-activité de la pompe soit détecté et pris en compte, il est nécessaire que les conditions précédemment décrites soient réalisées pendant une durée au moins égale à une première durée prédéterminée.

Selon l'invention, lesdits moyens de détection comprennent des troisièmes moyens de comparaison de la pression d'alimentation en carburant dudit injecteur avec une deuxième pression de seuil.

Selon l'invention, lesdits moyens de détection comprennent des quatrièmes moyens de comparaison de la valeur respective de deuxièmes paramètres de fonctionnement du système avec des deuxièmes valeurs prédéterminées.

En outre, lesdits moyens de détection sont adaptés pour détecter un défaut d'activité de la pompe lorsque, pendant une durée au moins égale à une deuxième durée prédéterminée, la pression d'alimentation en carburant dudit injecteur est inférieure à ladite deuxième pression de seuil, et lesdits deuxièmes paramètres valent lesdites deuxièmes valeurs prédéterminées respectives.

En d'autres termes, pour pouvoir détecter un défaut d'activité de la pompe, il est nécessaire que la pression d'alimentation en carburant de l'injecteur soit inférieure à la deuxième pression de seuil, et que des paramètres de fonctionnement du système aient des valeurs prédéterminées, pendant une durée au moins égale à une deuxième durée prédéterminée.

Les première et deuxième durées prédéterminées peuvent, par exemple, être égales.

Par exemple, lesdits premiers paramètres comprennent une information représentative de l'état de la demande d'activation de ladite pompe, une information représentative de l'état de stabilisation de la pression d'alimentation en carburant dudit injecteur, une information représentative de l'état de fonctionnement du capteur de mesure de la pression d'alimentation en carburant dudit injecteur, une information représentative de l'état de fonctionnement de ladite pompe, et une information représentative de l'état de fonctionnement dudit injecteur.

On entend par état d'activation de la pompe, soit un état dans lequel la pompe est active, soit un état dans lequel la pompe est non-active ou inactive. L'état de fonctionnement d'un élément du système correspond à un fonctionnement détecté avec ou sans défaut, par exemple avec ou sans défaut électrique.

Par exemple, lesdits deuxièmes paramètres comprennent une information représentative de l'état de la demande d'activation de ladite pompe, une information représentative de l'état de fonctionnement du capteur de mesure de la pression d'alimentation en carburant dudit injecteur, une information représentative de l'état de fonctionnement de ladite pompe, et une information représentative de l'état de fonctionnement dudit injecteur.

Par exemple, lesdites premières valeurs prédéterminées représentent respectivement une absence de demande d'activation de la pompe, une pression stabilisée, une absence de défaut de fonctionnement du capteur de mesure de la pression d'alimentation en carburant dudit injecteur, une absence de défaut de fonctionnement de ladite pompe, et une absence de défaut de fonctionnement dudit injecteur.

Par exemple, lesdites deuxièmes valeurs prédéterminées représentent respectivement une demande d'activation de la pompe, une absence de défaut de fonctionnement du capteur de mesure de la pression d'alimentation en carburant dudit injecteur, une absence de défaut de fonctionnement de ladite pompe, et une absence de défaut de fonctionnement dudit injecteur.

D'autres buts, caractéristiques et avantages de l'invention apparaîtront à la lecture de la description suivante, de quelques exemples nullement limitatifs, et faite en référence aux dessins annexés, sur lesquels :
- la figure 1 est un schéma synoptique d'un mode de réalisation d'un système selon un aspect de l'invention ;
- la figure 2 est un schéma synoptique illustrant la pression d'alimentation en carburant de la pompe en fonction de la commande d'activation de la pompe pour un fonctionnement normal de la pompe ; et
- la figure 3 est un schéma synoptique d'un mode de mise en oeuvre du procédé selon un aspect de l'invention.

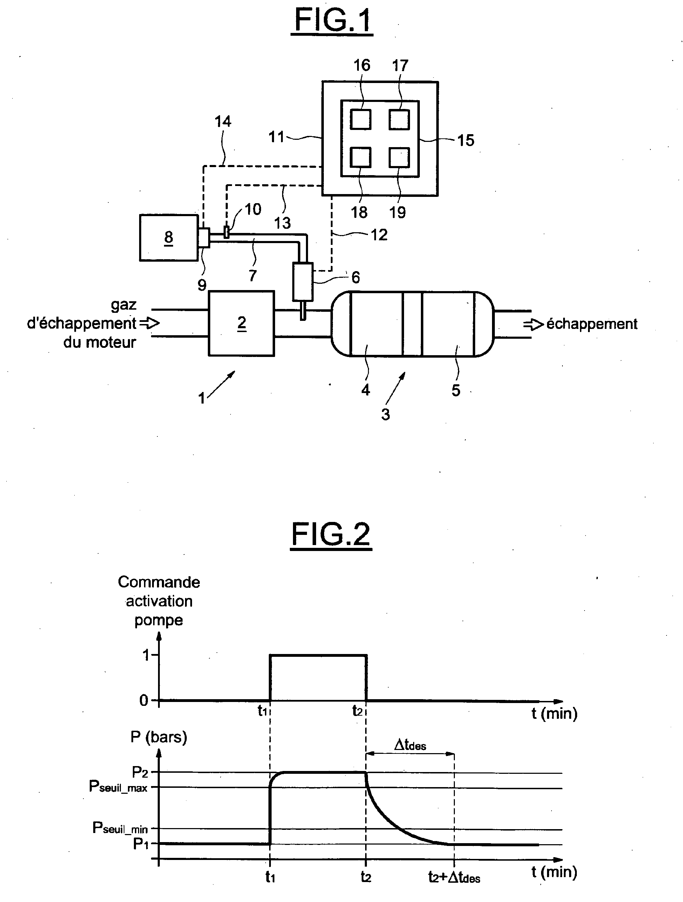

La figure 1 représente un système selon l'invention, embarqué à bord d'un véhicule automobile. La ligne d'échappement 1 d'un véhicule automobile équipé.d'un moteur diesel, comprend un dispositif catalytique 2 d'oxydation des hydrocarbures et du monoxyde de carbone.

La ligne d'échappement comprend également un filtre à particules catalytique 3, comprenant un catalyseur d'oxydation 4 et un filtre à particules 5.

Un injecteur 6 pulvérise du carburant en amont du catalyseur d'oxydation 4. Le catalyseur d'oxydation 4 est sollicité périodiquement pendant les phases de régénération du filtre à particules 5 pour créer de la chaleur permettant la régénération du filtre à particules 5. L'injection de carburant par l'injecteur 6 permet de réchauffer les gaz d'échappement. L'injecteur 6 est alimenté en carburant par l'intermédiaire d'un conduit 7 reliant l'injecteur 6 à un réservoir de carburant 8. Une pompe à carburant 9 permet de fournir du carburant sous pression à l'injecteur 6 par le conduit 7.

Le conduit d'alimentation en carburant 7 est équipé d,'un capteur 10 de mesure de la pression d'alimentation P en carburant de l'injecteur 6.

L'injecteur 6, le capteur 10 et la pompe 9 sont respectivement connectés à une unité de commande électronique 11 par des connexions 12, 13 et 14.

L'unité de commande électronique 11 comprend un module de détection 15 d'un défaut de l'état d'activation de la pompe 9, à partir de la pression d'alimentation P en carburant de l'injecteur 6 mesurée par le capteur de pression 10.

Le module de détection 15 comprend un premier module de comparaison 16 pour comparer la pression d'alimentation P en carburant de l'injecteur 6 mesurée par le capteur de pression 10 avec une première pression de seuil P_{seuil_min}.

Le premier module de comparaison 16 permet de tester si la pression d'alimentation P en carburant de l'injecteur 6 est supérieure à une première pression de seuil P_{seuil_min}.

Le module de détection 15 comprend en outre un deuxième module de comparaison 17 pour comparer la valeur respective de premiers paramètres de fonctionnement du système avec des premières valeurs prédéterminées. Les premiers paramètres comprennent, par exemple, une information représentative de l'état de la demande d'activation de la pompe 9, une information représentative de l'état de stabilisation de la pression d'alimentation P en carburant de l'injecteur 6, une information représentative de l'état de fonctionnement du capteur de mesure 9 de la pression d'alimentation P en carburant de l'injecteur 6, une information représentative de l'état de fonctionnement de la pompe 9, et une information représentative de l'état de fonctionnement de l'injecteur 6.

Le module de détection 15 comprend également un troisième module de comparaison 18 de la pression d'alimentation P en carburant de l'injecteur 6 avec une deuxième pression de seuil P_{seuil_max}.

En outre, le module de détection 15 comprend un quatrième module de comparaison 19 de la valeur respective de deuxièmes paramètres de fonctionnement du système avec des deuxièmes valeurs prédéterminées.

La figure 2 est un schéma de principe de l'évolution de la pression d'alimentation P en carburant de l'injecteur 6 en fonction de l'activation et de la désactivation de la pompe 9 d'alimentation en carburant de l'injecteur 6. La figure 2 illustre une activation ou désactivation de la pompe 9 sans défaut de l'état d'activation de la pompe 9.

A un instant t₁, on commande l'activation de la pompe 9. Instantanément, la pression d'alimentation P en carburant de l'injecteur 6 passe de la valeur P₁ à la valeur P₂. La pression d'alimentation P en carburant de l'injecteur 6 est mesurée par le capteur 10 de mesure de la pression P en carburant dans le conduit 7. Par exemple, la valeur P₁ est de l'ordre de 3 bars, et la valeur P₂ de l'ordre de 5,5 bars.

La pression d'alimentation P en carburant de l'injecteur 6 reste stable à la valeur P₂, jusqu'à un instant t₂ auquel on commande une désactivation de la pompe à carburant 9. La pression d'alimentation P en carburant de l'injecteur 6 décroît alors pendant une durée Δt_{des} jusqu'à atteindre la valeur P₁.

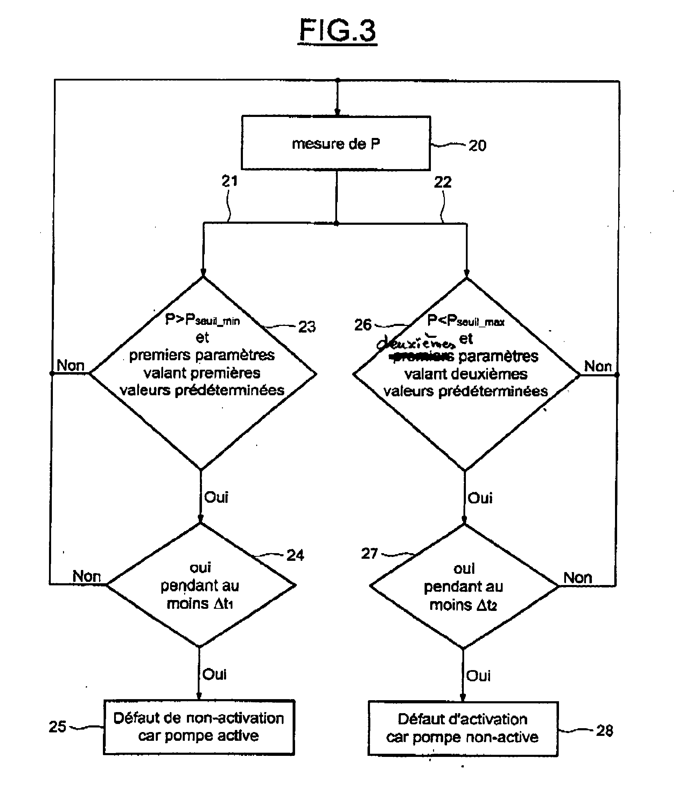

La figure 3 illustre un mode de réalisation du procédé selon l'invention. Le capteur de mesure de pression 10 mesure en continu la pression d'alimentation P de l'injecteur 6, et transmet les valeurs de mesure à l'unité de commande électronique 11 par l'intermédiaire de la connexion 13. (étape 20). On effectue, en parallèle, la détection d'un défaut d'activation de la pompe 9 et la détection d'un défaut de non-activation de la pompe 9, à partir de la pression d'alimentation P en carburant de l'injecteur 6.

La branche 21 correspond à la détection d'un défaut de non-activation de la pompe 9, et la branche 22 correspond à la détection d'un défaut d'activation de la pompe.

Dans la branche 21, on commence par tester si la pression d'alimentation P en carburant de l'injecteur 6 est supérieure à la première pression de seuil P_{seuil_min}, et si les premiers paramètres de fonctionnement du système valent les premières valeurs prédéterminées (étape 23). En effet, pour qu'il y ait un défaut de non-activation de la pompe, c'est-à-dire si la pompe est active alors qu'elle doit être inactive, il faut que la pression P d'alimentation en carburant de l'injecteur 6 soit supérieure à une première pression de seuil P_{seuil_min} légèrement supérieure à la pression P₁. Il faut également que les premiers paramètres de fonctionnement du système valent les premières valeurs prédéterminées. En d'autres termes, il est également nécessaire que l'information représentative de l'état de la demande d'activation de la pompe 9 représente une absence de demande d'activation de la pompe 9, que l'information représentative de l'état de stabilisation de la pression d'alimentation P en carburant de l'injecteur 6 représente une pression stabilisée, que l'information représentative de l'état de fonctionnement du capteur de mesure 10 de la pression d'alimentation P en carburant P de l'injecteur 6 représente une absence de défaut de fonctionnement du capteur de mesure 10. Il faut également que l'information représentative de l'état de fonctionnement de la pompe 9 représente une absence de défaut de fonctionnement de la pompe 9, et que l'information représentative de l'état de fonctionnement de l'injecteur 6 représente une absence de défaut de fonctionnement de l'injecteur 6.

Si ces conditions (étape 23) sont réalisées pendant au moins une première durée prédéterminée Δt₁ (étape 24), alors un défaut de non-activation de la pompe (étape 25) est détecté, car la pompe est active alors qu'elle ne doit pas l'être.

Dans la branche 22, on commence par tester si la pression d'alimentation P en carburant de l'injecteur 6 est inférieure à la deuxième pression de seuil P_{seuil_max}, et si les deuxièmes paramètres de fonctionnement du système valent les deuxièmes valeurs prédéterminées (étape 26). En effet, pour qu'il y ait un défaut d'activation de la pompe, c'est-à-dire si la pompe est non-active alors qu'elle doit être active, il faut que la pression P d'alimentation en carburant de l'injecteur 6 soit inférieure à une deuxième pression de seuil P_{seuil_max} légèrement inférieure à la pression P₂. Il faut également que les deuxièmes paramètres de fonctionnement du système valent les deuxièmes valeurs prédéterminées. En d'autres termes, il est également nécessaire que l'information représentative de l'état de la demande d'activation de la pompe 9 représente une demande d'activation de la pompe 9, que l'information représentative de l'état de fonctionnement du capteur de mesure 10 de la pression d'alimentation P en carburant P de l'injecteur 6 représente une absence de défaut de fonctionnement du capteur de mesure 10. Il faut également que l'information représentative de l'état de fonctionnement de la pompe 9 représente une absence de défaut de fonctionnement de la pompe 9, et que l'information représentative de l'état de fonctionnement de l'injecteur 6 représente une absence de défaut de fonctionnement de l'injecteur 6.

Si ces conditions (étape 26) sont réalisées pendant au moins une deuxième durée prédéterminée Δt₂ (étape 27), alors un défaut d'activation de la pompe (étape 28) est détecté, car la pompe est inactive alors qu'elle devrait être active.

Il est inutile de vérifier, dans ce cas, que la pression P d'alimentation en carburant de l'injecteur 6 est stabilisée, car la période de désactivation Δt_{des} de la pompe 9 est détectée par un autre moyen de contrôle, et le système décrit est inactif lorsque la pompe 9 est en phase de désactivation. Une phase de désactivation correspond à une période Δt_{des}, par exemple de l'ordre de 30 minutes, durant laquelle la pression chute de la valeur P₂ correspondant à la pompe 9 active à la valeur P₁ correspondant à la pompe 9 inactive.

La présente invention permet de contrôler l'état d'activation de la pompe d'alimentation en carburant d'un injecteur disposé en amont d'un filtre à particules catalytique, et ainsi d'améliorer le contrôle du fonctionnement des phases de régénération du filtre.

## Revendications

1. Système de régénération d'un filtre à particules catalytique (3) situé dans la ligne d'échappement (1) d'un moteur diesel, comprenant une unité de commande électronique (11), un injecteur de carburant commandé (6) disposé en amont du filtre à particules catalytique (3) et alimenté en carburant par une pompe commandée (9), et un capteur (10) de mesure de la pression d'alimentation (P) en carburant dudit injecteur (6), **caractérisé par le fait que** ladite unité de commande électronique (11) comprend un module de détection (15) d'un défaut de non-activation de la pompe (9) à partir de la pression d'alimentation (P) en carburant dudit injecteur (6) et de premiers paramètres de fonctionnement du système, ledit module de détection (15) comprend un premier module de comparaison (16) de la pression d'alimentation (P) en carburant dudit injecteur (6) avec une première pression de seuil (P_{seuil_min}) et un deuxième module de comparaison (17) qui détermine si les valeurs respectives des premiers paramètres de fonctionnement du système valent des premières valeurs prédéterminées, lesdits premiers paramètres comprenant une information représentative de l'état de la demande d'activation de ladite pompe (9), une information représentative de l'état de stabilisation de la pression d'alimentation (P) en carburant dudit injecteur (6), une information représentative de l'état de fonctionnement du capteur de mesure (10) de la pression d'alimentation (P) en carburant dudit injecteur (6), une information représentative de l'état de fonctionnement de ladite pompe (9), et une information représentative de l'état de fonctionnement dudit injecteur (6), lesdites premières valeurs prédéterminées représentant respectivement une absence de demande d'activation de la pompe (9), une pression stabilisée, une absence de défaut de fonctionnement du capteur de mesure (10) de la pression d'alimentation (P) en carburant dudit injecteur (6), une absence de défaut de fonctionnement de ladite pompe (9), et une absence de défaut de fonctionnement dudit injecteur (6).

2. Système selon la revendication 1, dans lequel ledit module de détection (15) détecte un défaut de non-activité de la pompe (9) lorsque, pendant une durée au moins égale à une première durée prédéterminée (Δt₁), la pression d'alimentation (P) en carburant dudit injecteur (6) est supérieure à ladite première pression de seuil (P_{seuil_min}), et lesdits premiers paramètres valant lesdites premières valeurs prédéterminées respectives.

3. Système de régénération d'un filtre à particules catalytique (3) situé dans la ligne d'échappement (1) d'un moteur diesel, comprenant une unité de commande électronique (11), un injecteur de carburant commandé (6) disposé en amont du filtre à particules catalytique (3) et alimenté en carburant par une pompe commandée (9), et un capteur (10) de mesure de la pression d'alimentation (P) en carburant dudit injecteur (6), **caractérisé par le fait que** ladite unité de commande électronique (11) comprend un module de détection (15) d'un défaut d'activation de la pompe (9) à partir de la pression d'alimentation (P) en carburant dudit injecteur (6) et de premiers paramètres de fonctionnement du système, ledit module de détection (15) comprenant un troisième module de comparaison (18) de la pression d'alimentation (P) en carburant dudit injecteur (6) avec une deuxième pression de seuil (P_{seuil_max}). et un quatrième module de comparaison (19) qui détermine si les valeurs respectives de deuxièmes paramètres de fonctionnement du système valent des deuxièmes valeurs prédéterminée, lesdits deuxièmes paramètres comprenant une information représentative de l'état de la demande d'activation de ladite pompe (9), une information représentative de l'état de fonctionnement du capteur de mesure (10) de la pression d'alimentation (P) en carburant dudit injecteur (6), une information représentative de l'état de fonctionnement de ladite pompe (9), et une information représentative de l'état de fonctionnement dudit injecteur (6), et lesdites deuxièmes valeurs prédéterminées représentant respectivement une demande d'activation de la pompe (9), une absence de défaut de fonctionnemetn du capteur de mesure (10) de la pression d'alimentation (P) en carburant dudit injecteur (6), une absence de défaut de fonctionnement de ladite pompe (9), et une absence de défaut de fonctionnement dudit injecteur (6).

4. Système selon la revendication 3, dans lequel ledit module de détection (15) détecte un défaut d'activité de la pompe (9) lorsque, pendant une durée au moins égale à une deuxième durée prédéterminée (Δt₂), la pression d'alimentation (P) en carburant dudit injecteur (6) est inférieure à ladite deuxième pression de seuil (P_{seuil_max}), et lesdits deuxièmes paramètres valant lesdites deuxièmes valeurs prédéterminées respectives.

## Claims

1. System for regenerating a catalytic particulate filter (3) located in the exhaust line (1) of a diesel engine, comprising an electronic control unit (11), a controlled fuel injector (6) located upstream of the catalytic particulate filter (3) and supplied with fuel by a controlled pump (9), and a sensor (10) for measuring the pressure (P) at which fuel is supplied to said injector (6), **characterized in that** the said electronic control unit (11) comprises a detection module (15) for detecting a fault of non-activation of the pump (9) on the basis of the pressure (P) at which fuel is supplied to said injector (6) and of first system operating parameters, said detection module (15) comprising a first comparison module (16) for comparing the pressure (P) at which fuel is supplied to said injector (6) against a first threshold pressure (P_{thresh_min}), and a second comparison module (17) which determines whether the respective values of the first system operating parameters equal first predetermined values, said first parameters comprising information representing the state of the demand for activation of said pump (9), information representing the state of stabilization of the pressure (P) at which fuel is supplied to said injector (6), information representing the state of operation of the sensor (10) that measures the pressure (P) at which fuel is supplied to said injector (6), information representing the state of operation of said pump (9), and information representing the state of operation of said injector (6), said first predetermined values respectively representing the absence of a demand to activate the pump (9), a stabilized pressure, the absence of a fault with the operation of the sensor (10) that measures the pressure (P) at which fuel is supplied to said injector (6), the absence of a fault with the operation of said pump (9), and the absence of a fault with the operation of said injector (6).

2. System according to Claim 2, in which said detection module (15) detects an inactivity fault with the pump (9) when, for a period of time at least equal to a first predetermined period of time (Δt₁), the pressure (P) at which fuel is supplied to said injector (6) exceeds said first threshold pressure (P_{thresh_min}) and said first parameters have adopted said respective first predetermined values.

3. System for regenerating a catalytic particulate filter (3) located in the exhaust line (1) of a diesel engine, comprising an electronic control unit (11), a controlled fuel injector (6) located upstream of the catalytic particulate filter (3) and supplied with fuel by a controlled pump (9), and a sensor (10) for measuring the pressure (P) at which fuel is supplied to said injector (6), **characterized in that** said electronic control unit (11) comprises a detection module (15) that detects a fault with the activation of the pump (9) on the basis of the pressure (P) at which fuel is supplied to said injector (6) and of first system operating parameters, said detection module (15) comprising a third comparison module (18) that compares the pressure (P) at which fuel is supplied to said injector (6) against a second threshold pressure (P_{thresh_max}), and a fourth comparison module (19) which determines whether the respective values of second system operating parameters equal second predetermined values, said second parameters comprising information representing the state of the demand for activation of said pump (9), information representing the state of operation of the sensor (10) that measures the pressure (P) at which fuel is supplied to said injector (6), information representing the state of operation of said pump (9), and information representing the state of operation of said injector (6), said second predetermined values respectively representing a demand to activate the pump (9), the absence of a fault with the operation of the sensor (10) that measures the pressure (P) at which fuel is supplied to said injector (6), the absence of a fault with the operation of said pump (9), and the absence of a fault with the operation of said injector (6).

4. System according to Claim 3, in which said detection module (15) detects an activity fault with the pump (9) when, for a period of time at least equal to a second predetermined period of time (Δt₂), the pressure (P) at which said injector (6) is supplied with fuel is below said second threshold pressure (P_{thresh_max}), and said second parameters have adopted said respective second predetermined values.

## Patentansprüche

1. System zur Regeneration eines katalytischen Partikelfilters (3), der sich in der Auspuffanlage (1) eines Dieselmotors befindet, mit einer elektronischen Steuereinheit (11), mit einer gesteuerten Kraftstoffeinspritzdüse (6), die vor dem katalytischen Partikelfilter (3) angeordnet ist und von einer gesteuerten Pumpe (9) mit Kraftstoff versorgt wird, und mit einem Messfühler (10) des Kraftstoffversorgungsdrucks (P) der Einspritzdüse (6), **dadurch gekennzeichnet, dass** die elektronische Steuereinheit (11) ein Erfassungsmodul (15) eines Fehlers der Nichtaktivierung der Pumpe (9) ausgehend von dem Kraftstoffversorgungsdruck (P) der Einspritzdüse (6) und von ersten Betriebsparametern des Systems enthält, das Erfassungsmodul (15) ein erstes Vergleichsmodul (16) des Kraftstoffversorgungsdrucks (P) der Einspritzdüse (6) mit einem ersten Schwellendruck (P_{Schwelle_min}) und ein zweites Vergleichsmodul (17) enthält, das bestimmt, ob die Werte der ersten Betriebsparameter des Systems ersten vorbestimmten Werten entsprechen, wobei die ersten Parameter eine für den Zustand der Aktivierungsanforderung der Pumpe (9) repräsentative Information, eine für den Stabilisierungszustand des Kraftstoffversorgungsdrucks (P) der Einspritzdüse (6) repräsentative Information, eine für den Betriebszustand des Messfühlers (10) des Kraftstoffversorgungsdrucks (P) der Einspritzdüse (6) repräsentative Information, eine für den Betriebszustand der Pumpe (9) repräsentative Information, und eine für den Betriebszustand der Einspritzdüse (6) repräsentative Information enthalten, wobei die ersten vorbestimmten Werte eine Abwesenheit einer Aktivierungsanforderung der Pumpe (9), einen stabilisierten Druck, eine Abwesenheit eines Betriebsfehlers des Messfühlers (10) des Kraftstoffversorgungsdrucks (P) der Einspritzdüse (6), eine Abwesenheit eines Betriebsfehlers der Pumpe (9) bzw. eine Abwesenheit eines Betriebsfehlers der Einspritzdüse (6) darstellen.

2. System nach Anspruch 1, bei dem das Erfassungsmodul (15) einen Fehler der Nichtaktivierung der Pumpe (9) erfasst, wenn während einer Dauer mindestens gleich einer ersten vorbestimmten Dauer (Δt₁) der Kraftstoffversorgungsdruck (P) der Einspritzdüse (6) höher ist als der erste Schwellendruck (P_{Schwelle_min}) und die ersten Parameter den ersten vorbestimmten Werten entsprechen.

3. System zur Regeneration eines katalytischen Partikelfilters (3), der sich in einer Auspuffanlage (1) eines Dieselmotors befindet, mit einer elektronischen Steuereinheit (11), mit einer gesteuerten Kraftstoff-Einspritzdüse (6), die vor dem katalytischen Partikelfilter (3) angeordnet ist und von einer gesteuerten Pumpe (9) mit Kraftstoff versorgt wird, und mit einem Messfühler (10) des Kraftstoffversorgungsdrucks (P) der Einspritzdüse (6), **dadurch gekennzeichnet, dass** die elektronische Steuereinheit (11) ein Erfassungsmodul (15) eines Fehlers der Aktivierung der Pumpe (9) ausgehend vom Kraftstoffversorgungsdruck (P) der Einspritzdüse (6) und von ersten Betriebsparametern des Systems enthält, wobei das Erfassungsmodul (15) ein drittes Vergleichsmodul (18) des Kraftstoffversorgungsdrucks (P) der Einspritzdüse (6) mit einem zweiten Schwellendruck (P_{Schwelle_max}) und ein viertes Vergleichsmodul (19) enthält, das bestimmt, ob die jeweiligen Werte von zweiten Betriebsparametern des Systems zweiten vorbestimmten Werten entsprechen, wobei die zweiten Parameter eine für den Zustand der Aktivierungsanforderung der Pumpe (9) repräsentative Information, eine für den Betriebszustand des Messfühlers (10) des Kraftstoffversorgungsdrucks (P) der Einspritzdüse (6) repräsentative Information, eine für den Betriebszustand der Pumpe (9) repräsentative Information und eine für den Betriebszustand der Einspritzdüse (6) repräsentative Information enthalten, und die zweiten vorbestimmten Werte eine Aktivierungsanforderung der Pumpe (9), eine Abwesenheit eines Betriebsfehlers des Messfühlers (10) des Kraftstoffversorgungsdrucks (P) der Einspritzdüse (6), eine Abwesenheit eines Betriebsfehlers der Pumpe (9) bzw. eine Abwesenheit eines Betriebsfehlers der Einspritzdüse (6) darstellen.

4. System nach Anspruch 3, bei dem das Erfassungsmodul (15) einen Aktivitätsfehler der Pumpe (9) erfasst, wenn während einer Dauer mindestens gleich einer zweiten vorbestimmten Dauer (Δt₂) der Kraftstoffversorgungsdruck (P) der Einspritzdüse (6) unter dem zweiten Schwellendruck (P_{Schwelle_max}) liegt und die zweiten Parameter den jeweiligen zweiten vorbestimmten Werten entsprechen.
